# EUROPÄISCHE PATENTSCHRIFT

(11) **EP 1 320 504 B1**
(45) Veröffentlichungstag und Bekanntmachung des Hinweises auf die Patenterteilung: **07.12.2005**
(21) Anmeldenummer: 01984634.4
(22) Anmeldetag: 12.09.2001
(51) Int. Cl.: B65G 53/16

(54) **VORRICHTUNG ZUM EINLEITEN VON SCHWER FLIESSENDEM SCHÜTTGUT IN EINE FÖRDERLEITUNG**
DEVICE FOR PASSING HEAVILY FLOWING BULK MATERIAL INTO A DELIVERY PIPE
DISPOSITIF POUR L'INTRODUCTION DE MATIERES EN VRAC A ECOULEMENT DIFFICILE DANS UNE CONDUITE D'ACHEMINEMENT

(30) Priorität: 18.09.2000 LU 90639
(43) Veröffentlichungstag der Anmeldung: 25.06.2003
(73) Patentinhaber: PAUL WURTH S.A., 1122 Luxembourg (LU)
(72) Erfinder: KROEMMER, Yvan, L-8360 Goetzingen (LU); BENI, Stefano, L-4580 Differdange (LU)
(74) Vertreter: Beissel, Jean
(86) Internationale Anmeldenummer: PCT/EP2001/010518
(87) Internationale Veröffentlichungsnummer: WO 2002/022476

(56) Entgegenhaltungen:
- EP-A- 0 247 235
- EP-A- 0 543 100
- GB-A- 815 882
- GB-A- 1 047 125
- JP-A- 58 104 829
- LU-A- 90 217
- US-A- 2 192 287
- US-A- 3 929 261
- US-A- 4 019 783

## Beschreibung

Die vorliegende Erfindung betrifft eine Vorrichtung zum Einleiten von schwer fließendem Schüttgut in eine Förderleitung.

Eine derartige Vorrichtung findet ihre Anwendung beispielsweise in einer Vorrichtung zum Eindüsen von Kunststoff in einen Schachtofen, bei der anstelle von gemahlener Kohle zerkleinerte Kunststoffabfälle in den Schachtofen eingeblasen werden. Hierzu werden die in einem Bunker gelagerten zerkleinerten Kunststoffabfälle in eine Förderleitung eingeleitet und unter hohem Druck durch diese zu den in der Schachtofenwand angeordneten Einblasdüsen gefördert.

Als Vorrichtungen zum Einleiten von Schüttgütern unter Druck in eine Transportleitung sind beispielsweise Zellenradschleusen bekannt, die unterhalb eines Vorratsbunkers für das Schüttgut angeordnet werden. Ein Zellenrad, bestehend aus einer Nabe und mehreren radialen Flügeln, das drehbar in einem Zellenradgehäuse angeordnet ist, unterteilt dieses in mehrere Kammern. Über eine Beschickungsöffnung an der Oberseite des Zellenradgehäuses gelangt das Schüttgut in eine der Kammern und wird nach einer Drehung des Zellenrades um beispielsweise 180° über eine Auslassöffnung an der Unterseite des Gehäuses in die Förderleitung eingeleitet. Eine derartige Zellenradschleuse wird beispielsweise in der WO-A-96/22241 vorgestellt.

Probleme treten bei derartigen mechanischen Einleitvorrichtungen insbesondere beim Fördern von schwer fließbarem, leicht faserigem Material, wie z.B. zerkleinerten Kunststoffabfällen auf. Das von den Flügeln des Zellenrades weiterbewegte Material verdichtet sich bei der Drehung des Zellenrades sehr leicht unter seinem Eigengewicht, so dass sich seine Fließeigenschaften weiterhin verschlechtern und ein Einleiten in die Förderleitung deutlich erschwert oder gar unmöglich wird. Dies führt zu häufigen Verstopfungen der Einleitvorrichtung, wodurch ein kontinuierlicher Betrieb der Anlage immer wieder gestört wird. Überdies dringt das verdichtete Material in die Zwischenräume zwischen den Flügeln des Zellenrades und dem Zellenradgehäuse ein und kann zum Stillstand der Einleitvorrichtung führen.

Aus diesem Grund wird in der LU-A-90217 eine Vorrichtung mit einer Wirbelkammer vorgeschlagen, in der das schwer fließbare Material in einen aufgelokkerten Zustand versetzt wird. Eine Förderleitung ist an die Wirbelkammer derart angeschlossen, dass die Förderleitung eine Eintrittsöffnung in einer seitlichen Wandung der Wirbelkammer ausbildet. Vor der Eintrittsöffnung ist in der Wirbelkammer eine Gaseinlassdüse für ein Druckgas angeordnet, die im Betrieb eine Gasströmung in Richtung der Eintrittsöffnung der Förderleitung erzeugt. Durch die Ausbildung der Wirbelzone unmittelbar vor der Eintrittsöffnung in die Förderleitung wird ein Verdichten des schwer fließenden Schüttguts vor dem Eintritt in die Förderleitung wirksam verhindert. Die seitliche Anordnung der Eintrittsöffnung verhindert dabei, dass nicht aufgelockertes Material unter seinem Eigengewicht in die Förderleitung gelangt. Die oben angesprochenen Verstopfungen und die hierdurch bedingten Stillstände der Anlage können daher weitestgehend verhindert werden. Allerdings kommt es in der Praxis um die Eintrittsöffnung herum immer wieder zu Materialablagerungen, die mit der Zeit zu einer Brückenbildung zwischen der Gaseinlassdüse und dem Bereich der Wandung der Wirbelkammer, der die Einlassöffnung umgibt, führt.

### Aufgabe der Erfindung

Aufgabe der vorliegenden Erfindung ist es folglich, eine Vorrichtung zum Einleiten von schwer fließendem Material in eine Förderleitung vorzuschlagen, die die oben beschriebenen Probleme weitestgehend vermeidet.

### Allgemeine Beschreibung der Erfindung

Diese Aufgabe wird gelöst durch eine Vorrichtung zum Einleiten von schwer fließendem Schüttgut in eine Förderleitung, mit einer Wirbelkammer, an die die Förderleitung von außen derart anschließbar ist, dass die Förderleitung eine Eintrittsöffnung in einer seitlichen Wandung der Wirbelkammer ausbildet, und mit einer Vorrichtung zur Erzeugung einer Gasströmung im Inneren der Wirbelkammer, wobei die Gasströmung in Richtung der Eintrittsöffnung gerichtet ist. Erfindungsgemäß ist weiterhin in der seitlichen Wandung der Wirbelkammer in unmittelbarer Nähe der Eintrittsöffnung ein Anströmboden angeordnet, durch den ein Auflockerungsfluid in die Wirbelkammer eingeleitet werden kann.

Durch die Gasströmung wird vor der seitlichen Eintrittsöffnung in die Förderleitung eine Wirbelzone ausgebildet, in der das schwer fließende Schüttgut in einen aufgelockerten Zustand versetzt wird. Ein Verdichten des schwer fließenden Schüttguts vor dem Eintritt in die Förderleitung wird wirksam' verhindert. Durch die Ausrichtung der Gasströmung in Richtung der Eintrittsöffnung erhält das aufgelockerte Schüttgut dabei eine Geschwindigkeitskomponente in Richtung der Eintrittsöffnung und tritt hierdurch in diese ein.

Das Einleiten eines Auflockerungsfluids, z.B. eines Auflockerungsgases, durch den in unmittelbarer Nähe der Eintrittsöffnung angeordneten Anströmboden verhindert dabei, dass sich in diesem Bereich Schüttgut an der seitlichen Wandung der Wirbelkammer ablagert. Eine Brückenbildung zwischen der Wandung und der Gaseinlassdüse kann hierdurch wirksam verhindert werden, so dass die Eintrittsöffnung während dem Betrieb der Anlage frei zugänglich bleibt.

Da die Wirbelzone in der Wirbelkammer im allgemeinen durch Einleiten eines Auflockerungsgases von unten her ausgebildet wird, ist der Anströmboden vorzugsweise unterhalb der Eintrittsöffnung angeordnet. Um eine Brückenbildung an der gesamten Peripherie der Eintrittsöffnung zu vermeiden, kann der Anströmboden beispielsweise mehrere Teilbereiche umfassen, die an der Peripherie der Eintrittsöffnung um die Eintrittsöffnung herum angeordnet sind. In einer alternativen Ausgestaltung ist der Anströmboden kreisringförmig ausgebildet und umgibt die Eintrittsöffnung radial auf der gesamten Peripherie.

Das Einleiten des Auflockerungsfluids durch den Anströmboden erfolgt vorzugsweise über eine Anströmkammer, die in der seitlichen Wandung der Wirbelkammer in unmittelbarer Nähe der Eintrittsöffnung angeordnet ist, wobei der Anströmboden die Anströmkammer zum Inneren der Wirbelkammer hin verschließt und wobei die Anströmkammer mit einem Auflockerungsgas beaufschlagbar ist. Hierdurch kann ein gleichmäßiger. Fluiddurchsatz über die gesamte Fläche des Anströmbodens erreicht werden.

Die Vorrichtung zur Erzeugung der Gasströmung umfasst beispielsweise eine Gaseinlassdüse, die an eine Druckgasversorgung angeschlossen ist, wobei die Gasäinlassdüse derart in der Wirbelkammer angeordnet ist, dass die gedachte Verlängerung ihrer Achse mit der Achse der Förderleitung zusammenfällt. Die Gaseinlassdüse ist beispielsweise der Eintrittsöffnung diagonal bzw. radial gegenüberliegend angeordnet, so dass die Gasströmung im wesentlichen quer durch die Wirbelkammer verläuft.

Die Gaseinlassdüse ist vorzugsweise entlang ihrer Achse verfahrbar und derart ausgestaltet, dass die Eintrittsöffnung in der seitlichen Wandung durch die Gaseinlassdüse verschließbar ist. Hierzu ist die der Eintrittsöffnung zugewandte Stirnseite der Gaseinlassdüse beispielsweise in Form und Durchmesser an die Eintrittsöffnung der Förderleitung angepasst, so dass die Düse beim Verfahren bis an die seitliche Wandung der Wirbelkammer an der Umrandung der Eintrittsöffnung anliegt und diese verschließt. Die Förderleitung kann daher bei Stillstand der Anlage oder vor deren Anfahren materialdicht verschlossen werden, ohne dass in der Förderleitung Bereiche auftreten, in denen keine Förderströmung vorhanden und das Material demgemäss verdichtet ist. Solche Bereiche, die z.B. bei einem einfachen Schieber zwischen dem Schieber und der nächstliegenden Fördergaszufuhr in der Leitung entstehen, führen regelmäßig zum Verstopfen der Leitung in diesem Bereich. Wird die Eintrittsöffnung durch die Gaseinlassdüse verschlossen, können solche Bereiche ohne Förderströmung nicht entstehen.

Durch das Verfahren der Gaseinlassdüse entlang ihrer Achse kann darüber hinaus der Abstand zwischen der Gaseinlassdüse und der Eintrittsöffnung in der seitlichen Wandung verändert werden. Die Ausdehnung der ausgebildeten Wirbelzone vor der Eintrittsöffnung kann demgemäss verändert werden, und mit dieser auch die Menge des in einen aufgelockerten Zustand versetzten Materials. Je größer der Abstand zwischen der Eintrittsöffnung und der Gaseinlassdüse ist, desto größer ist die ausgebildete Wirbelzone und dementsprechend auch die Menge des aufgelockerten Materials.

Die Gaseinlassdüse ist vorteilhaft als Laval-Düse ausgebildet, so dass die Gasströmung Schallgeschwindigkeit aufweist. Eine derartige Laval-Düse ermöglicht eine sehr einfache Regelung des Gasdurchsatzes der Düse durch eine einfache Regelung des Gasvordrucks unabhängig von dem in der Wirbelkammer herrschenden Druck. Überdies erhält man mit einer derartigen Laval-Düse eine sehr gut gerichtete Gasströmung in Richtung der Eintrittsöffnung, die aufgrund der hohen Gasgeschwindigkeit das Material auch über eine größere Distanz zwischen Düse und Eintrittsöffnung wirksam in die Förderleitung einleiten kann.

In einer bevorzugten Ausgestaltung weist die Vorrichtung mehrere Dosiergasdüsen auf, die in der seitlichen Wandung um die Förderleitung herum derart angeordnet sind, dass sie in die Förderleitung einmünden. Die Dosiergasdüsen sind vorzugsweise derart angeordnet, dass sie senkrecht zur Achse der Förderleitung in diese einmünden. Alternativ können die Dosiergasdüsen derart angeordnet sein, dass sie schräg zur Achse der Förderleitung in Richtung des Förderstroms einmünden.

Durch diese Dosiergasdüsen wird ein für den Weitertransport des Materials in der Förderleitung notwendiges Dosiergas unmittelbar stromabwärts der Eintrittsöffnung in die Förderleitung eingebracht. Das Schüttgut wird folglich unmittelbar nachdem es durch den in der Wirbelkammer vorhandenen Gasstrom in die Eintrittsöffnung geleitet worden ist, von dem Dosiergasstrom erfasst und von diesem weitertransportiert. Bereiche, in denen sich das Material aus dem Förderstrom absetzen und verdichten kann, entstehen folglich nicht. Es ist anzumerken, dass sich beim Verändern der Dosiergasmenge auch die geförderte Materialmenge ändert. Demnach kann eine Regelung der Dosiergasmenge zur Materialmengenregelung eingesetzt werden.

Die Wirbelkammer ist vorteilhaft als Druckgefäß ausgebildet, so dass ein Einleiten von Schüttgut in eine unter Druck stehende Förderleitung möglich ist. In diesem Fall wird dann die gesamte Wirbelkammer unter Überdruck betrieben.

Weiterhin weist die Wirbelkammer in ihrem unteren Bereich bevorzugt einen Anströmboden auf, durch den ein Auflockerungsgas in die Wirbelkammer eingeleitet werden kann. Hierdurch wird das schwer fließende Schüttgut in der gesamten Wirbelkammer in einem fluidisierten Zustand gehalten und somit eine Verdichtung des Materials verhindert.

### Beschreibung anhand der Figuren

Im folgenden wird nun eine Ausgestaltung der Erfindung anhand der beiliegenden Figuren beschrieben. Es zeigen:
- Fig.1:: einen Längsschnitt durch eine bevorzugte Ausgestaltung einer Vorrichtung zum Einleiten von schwer fließendem Schüttgut in eine Förderleitung;
- Fig.2:: eine Draufsicht auf die Vorrichtung aus Fig.1;
- Fig.3:: eine Vergrößerung des Bereichs um die Eintrittsöffnung aus der Fig.1;
- Fig.4:: eine Ausgestaltung eines Einblasgefäßes mit mehreren Vorrichtungen zum Einleiten von schwer fließendem Schüttgut in eine Förderleitung;
- Fig.5:: einen Schnitt durch den unteren Bereich des Einblasgefäßes der Fig.4.

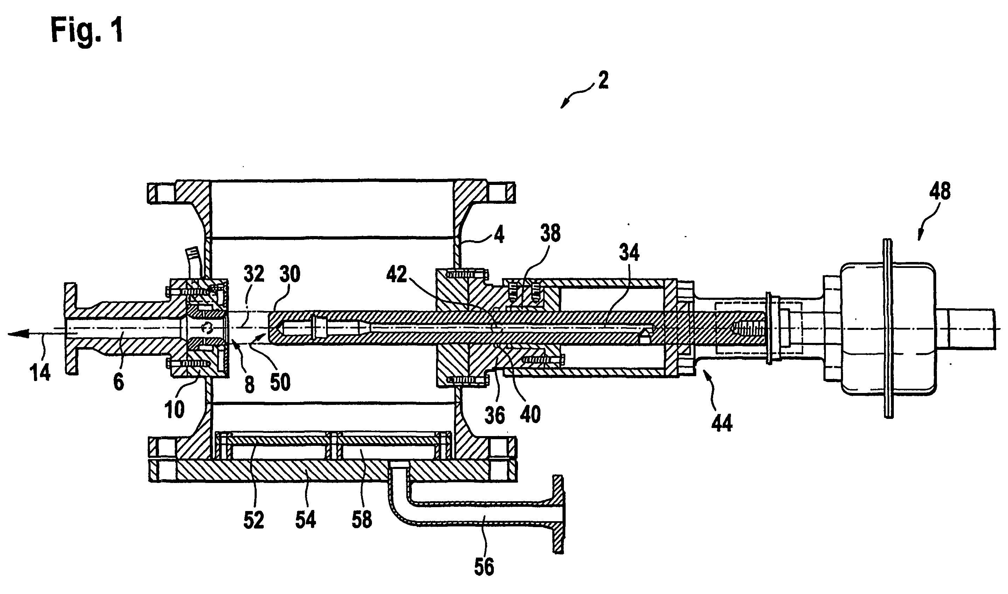

Figur 1 zeigt einen Längsschnitt durch eine bevorzugte Ausgestaltung einer Vorrichtung 2 zum Einleiten von schwer fließendem Schüttgut in eine Förder leitung. Diese umfasst im wesentlichen eine beispielsweise zylindrische Wirbelkammer 4, an die eine Förderleitung 6 von außen derart anschließbar ist, dass sie in der Wandung der Wirbelkammer 4 eine Eintrittsöffnung 8 für das zu fördernde Schüttgut ausbildet.

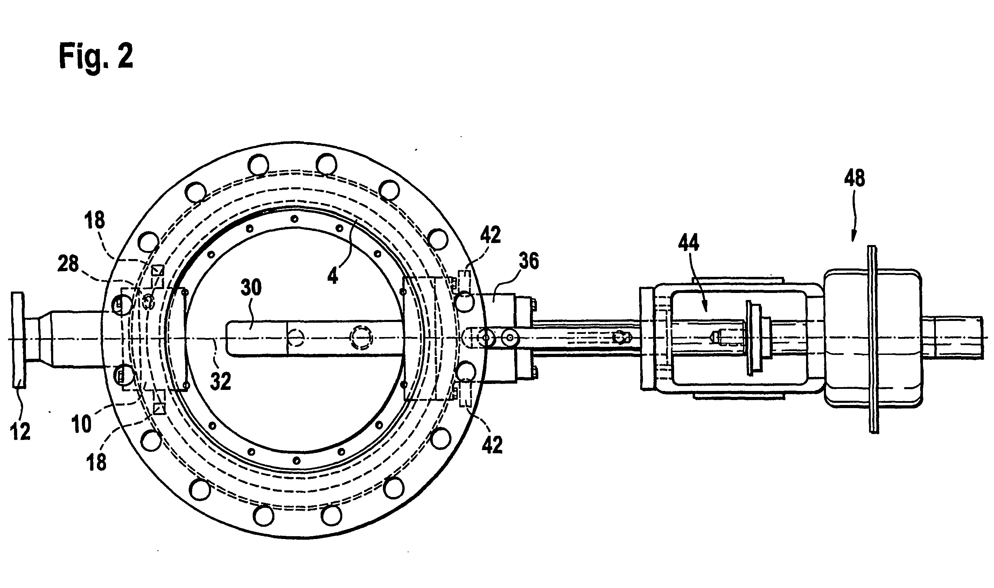

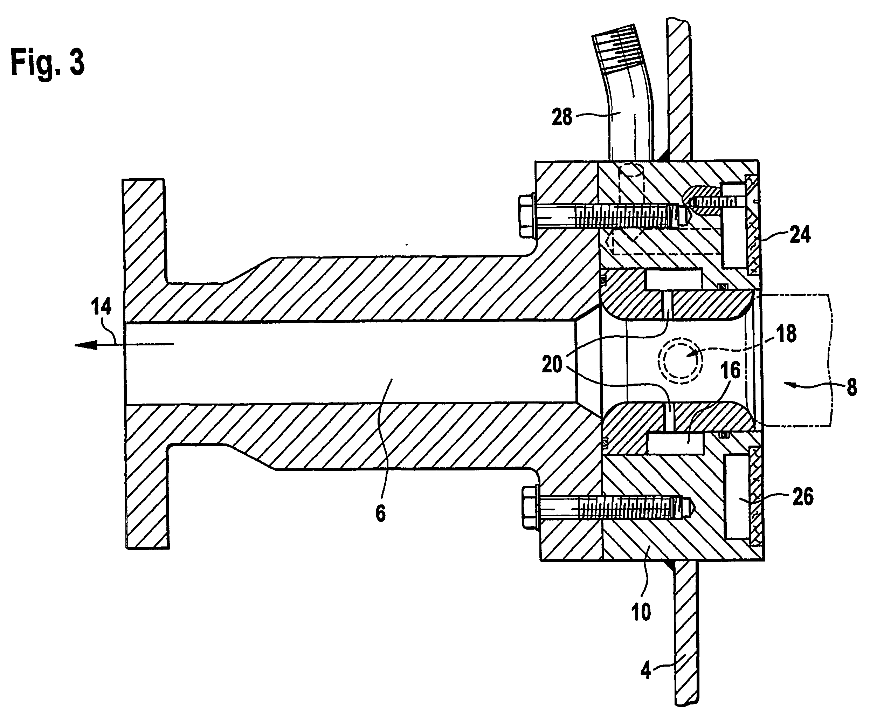

In der dargestellten Ausführung weist die Wandung der Wirbelkammer 4 hierzu einen seitlich eingeschweißten Stutzen 10 auf, an den die Förderleitung 6 mittels eines Flanschs 12 anschließbar ist (siehe auch Fig. 3). In dem Stutzen 10 ist in Förderrichtung (dargestellt durch den Pfeil 14) stromabwärts unmittelbar hinter der Eintrittsöffnung 8 ein Ringkanal 16 um die Förderleitung 6 ausgeführt, der von außen über einen oder mehrere Anschlüsse 18 (siehe Fig.2) mit einem Dosiergas beaufschlagt werden kann.

Weiterhin sind in dem Stutzen 10 mehrere Dosiergasdüsen 20 um die Förderleitung 6 herum ausgeführt, die sich jeweils von dem Ringkanal 16 senkrecht zur Achse der Förderleitung 6 bis zur Förderleitung 6 hin erstrecken und in dieser Einmündungen ausbilden. Wird der Ringkanal 16 mit einem Dosiergas unter hohem Druck beaufschlagt, strömt dieses durch die Einmündungen in die Förderleitung 6 ein und bildet hier einen Förderstrom für das zu fördernde Material aus. Hierdurch wird Schüttgut, das durch die Eintrittsöffnung 8 in die Förderleitung 6 gelangt unmittelbar hinter der Eintrittsöffnung von dem Förderstrom erfasst und weitergeleitet.

Um die Eintrittsöffnung 8 herum ist in dem Stutzen 10 ein in Richtung der Wir belkammer geöffneter Ringkanal 22 ausgeführt. Zum Inneren der Wirbelkammer hin ist dieser Ringkanal mit einem ringförmigen gasdurchlässigen Anströmboden 24 abgedeckt, so dass eine ringförmige Anströmkammer 26 ausgebildet wird. Die Anströmkammer wird über einen Gasanschluss 28 mit einem Auflockerungsgas beaufschlagt, das durch den Anströmboden 24 in die Wir belkammer einströmt. Hierdurch werden Ablagerungen im Bereich der Peripherie der Eintrittsöffnung 8 und die damit einhergehende Brückenbildung wirksam vermieden.

Zum Einleiten von Schüttgut in die Eintrittsöffnung weist die Vorrichtung 2 eine Gaseinlassdüse 30 auf, die im Betrieb eine gerichtete Gasströmung mit hoher Geschwindigkeit in Richtung der Eintrittsöffnung 8 erzeugt. Bei dieser Gaseinlassdüse 30 kann es sich beispielsweise um eine Laval-Düse handeln, die der Eintrittsöffnung 8 derart radial gegenüberliegend in der Wirbelkammer 4 angeordnet ist, dass die gedachte Verlängerung ihrer Achse 32 mit der Achse der Förderleitung 6 zusammenfällt.

Die Gaseinlassdüse 30 ist über ein Gaszufuhrrohr 34 und beispielsweise einen Drehanschluss an eine Druckgasversorgung angeschlossen, mittels derer die Düse 30 mit einem Druckgas beaufschlagt werden kann. Das Gaszufuhrrohr 24 ist hierzu vorzugsweise durch eine Bohrung in einem in die Wandung der Wirbelkammer 4 eingesetzten Stutzen 36 aus der Wirbelkammer 4 herausgeführt, wobei zur Abdichtung beispielsweise eine Stopfbuchse 38 verwendet wird. Zwischen der Stopfbuchse 38 und der Wirbelkammer 4 ist in dem Stutzen 36 vorzugsweise eine Ringnut 40 um die Bohrung ausgeführt, die von außen über Anschlüsse 42 mit einem Sperrgas beaufschlagt werden kann. Diese Sperrgas verhindert dann im Betrieb ein Eindringen von Schüttgut in die Bohrung und die Stopfbuchse.

Wird die Gaseinlassdüse 30 mit einem Druckgas beaufschlagt, erzeugt sie im Inneren der Wirbelkammer 4 eine Gasströmung, die vor der Eintrittsöffnung 8 eine Wirbelzone ausbildet. In dieser Wirbelzone wird das schwer fließende Schüttgut in einen aufgelockerten Zustand versetzt und erhält dabei durch die Ausrichtung der Gasströmung in Richtung der Eintrittsöffnung 8 eine Geschwindigkeitskomponente in Richtung der Eintrittsöffnung 8, so dass das aufgewirbelte Material in diese eintritt.

Die Verwendung einer Laval-Düse zur Erzeugung der gerichteten Gasströmung ermöglicht einerseits eine sehr einfache Regelung des Gasdurchsatzes der Düse 30 durch eine einfache Regelung des Gasvordrucks unabhängig von dem in der Wirbelkammer 4 herrschenden Druck. Andererseits erhält man mit einer derartigen Laval-Düse eine sehr gut gerichtete Gasströmung in Richtung der Eintrittsöffnung 8, die aufgrund der hohen Gasgeschwindigkeit das Material auch über eine größere Distanz zwischen Düse und Eintrittsöffnung wirksam in die Förderleitung 8 einleiten kann.

Die Gaseinlassdüse 30 ist vorzugsweise entlang ihrer Achse 22 verfahrbar angeordnet, dass der Abstand zwischen der Gaseinlassdüse 30 und der Eintrittsöffnung 8 in der seitlichen Wandung veränderbar ist. Bei der dargestellten Ausgestaltung der Vorrichtung ist die Gaseinlassdüse 30 und das sich axial daran anschließende Gaszufuhrrohr 34 verschiebbar in der Bohrung des Stutzens 36 gelagert. Der Antrieb des Gaseinlassdüse erfolgt dann beispielsweise über einen Axialantrieb 48, der an das hintere Ende 44 des Gaszufuhrrohr gekoppelt ist. Alternativ kann das Gaszufuhrrohr an seinem hinteren Ende ein Schnekkengewinde aufweisen, das mit einem entsprechenden Gewinde in einer an dem Stutzen montierten Gewindeplatte zusammenwirkt. Wird das Gaszufuhrrohr 34 durch einen Antrieb um die eigene Achse gedreht, schraubt sich das Gaszufuhrrohr 34 mit der daran montierten Düse 30 je nach Drehrichtung weiter in die Wirbelkammer hinein oder aus dieser heraus. Auf diese Weise kann der Abstand zwischen der Eintrittsöffnung 8 und der Gaseinlassdüse beispielsweise zwischen 0 und 30 mm eingestellt werden.

Es ist anzumerken, dass die Gewindeplatte 46 vorzugsweise in einem gewissen Abstand von der Wirbelkammer 4 angeordnet ist, so dass das Schneckengewinde derart ausgestaltet sein kann, dass es selbst bei ganz eingefahrener Düse 30 nicht in die Stopfbuchse 38 hineinreicht.

Die Gaseinlassdüse 30 ist vorzugsweise derart ausgestaltet, dass die Eintrittsöffnung 8 in der seitlichen Wandung durch die Gaseinlassdüse 30 verschließbar ist. Hierzu ist die der Eintrittsöffnung zugewandte Stirnseite 50 der Gaseinlassdüse 30 beispielsweise in Form und Durchmesser an die Eintrittsöffnung 8 der Förderleitung 6 angepasst, so dass die Düse beim Verfahren bis an die seitliche Wandung der Wirbelkammer 4 an der Umrandung der Eintrittsöffnung 8 anliegt und diese verschließt. Diese Position der Gaseinlassdüse ist in Fig.1 gestrichelt eingezeichnet.

Die Förderleitung 6 kann daher bei Stillstand der Anlage oder vor deren Anfahren materialdicht verschlossen werden, ohne dass in der Förderleitung 6 Bereiche auftreten, in denen keine Förderströmung vorhanden und das Material demgemäss verdichtet ist. Solche Bereiche, die z.B. bei einem einfachen Schieber zwischen dem Schieber und der nächstliegenden Dosiergaszufuhr in der Leitung entstehen, führen regelmäßig zum Verstopfen der Leitung in diesem Bereich. Wird die Eintrittsöffnung durch die Gaseinlassdüse verschlossen, können solche Bereiche ohne Förderströmung nicht entstehen.

Die Wirbelkammer 4 ist vorteilhaft als Druckgefäß ausgebildet, so dass ein Einleiten von Schüttgut in eine unter Druck stehende Förderleitung möglich ist. In diesem Fall kann dann die gesamte Wirbelkammer unter einem Überdruck betrieben werden, wobei je nach Anwendung Überdrücke von bis zu 10 bar üblich sind. Weiterhin weist die Wirbelkammer 4 in ihrem unteren Bereich bevorzugt einen Anströmboden 52 auf, durch den ein Auflockerungsgas in die Wirbelkammer eingeleitet werden kann. Der Anströmboden 52 ist beispielsweise an den unteren Deckelflansch 54 der Wirbelkammer 4 montiert, der seinerseits abnehmbar mit der seitlichen Wandung der Wirbelkammer verschraubt ist. Eine Gaszufuhrleitung 56 erstreckt sich durch den Deckelflansch 54 und mündet in eine Anströmkammer 58 zwischen dem Deckelflansch 54 und dem Anströmboden 52.

Wird der Anströmboden 52 über die Gaszufuhrleitung 56 mit einem Anströmgas beaufschlagt, wird das schwer fließende Schüttgut in der gesamten Wirbelkammer in einem fluidisierten Zustand gehalten und somit eine Verdichtung des Materials verhindert.

Es ist anzumerken, dass sowohl die Laval-Düse als auch die Wandung um die Eintrittöffnung 8 herum vorzugsweise aus einem gehärteten Material bestehen, z.B. einem Hartmetall oder aus Keramik, um eine Abnutzung durch die beschleunigten Schüttgutpartikel möglichst gering zu halten.

Es ist weiter anzumerken, dass die Wirbelkammer im Betrieb beispielsweise direkt unter einem Vorratsbunker für das Schüttgut montiert werden kann. Der Eintrag des Schüttguts in die Wirbelkammer erfolgt dann direkt unter der Einwirkung der Schwerkraft. Der Durchmesser der Wirbelkammer 4 ist daher derart zu wählen, dass ein Nachrutschen des Schüttguts nicht behindert wird.

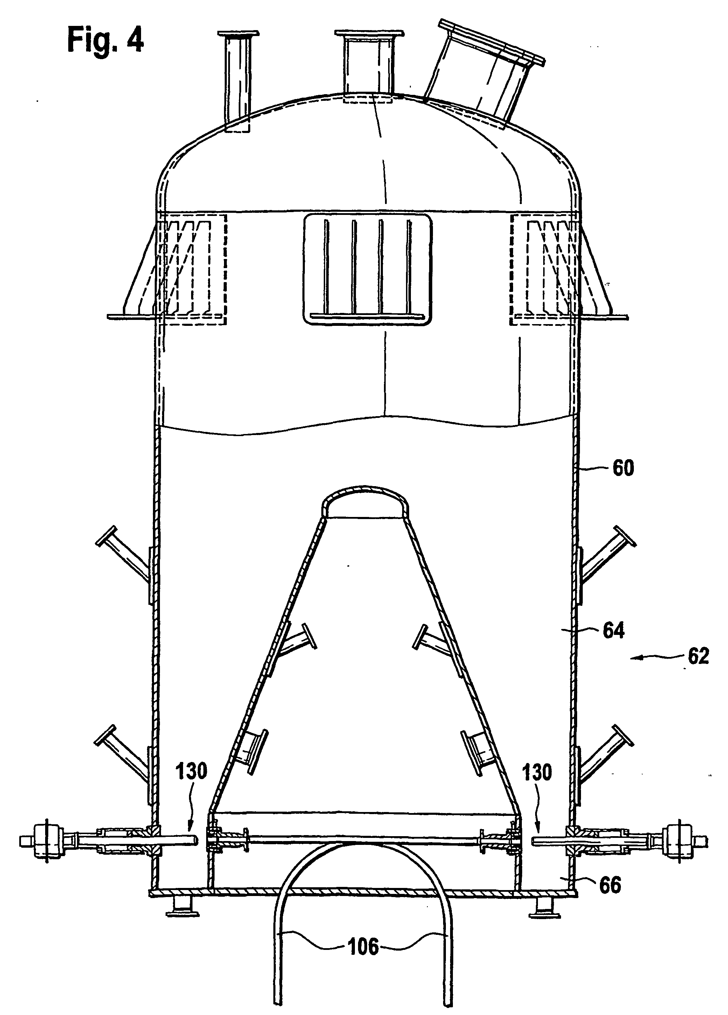

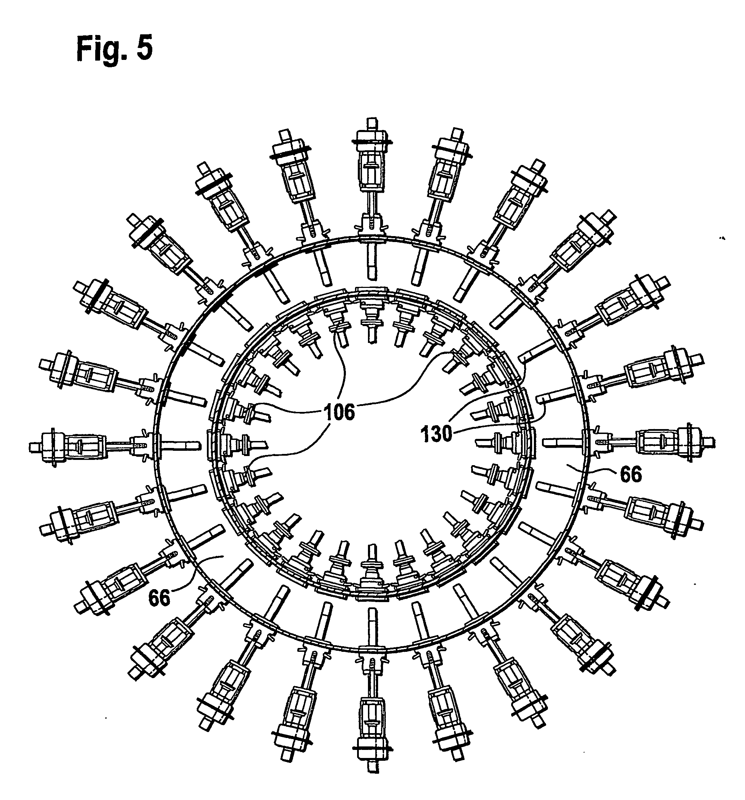

In einer anderen Ausgestaltung ist die Wirbelkammer integraler Bestandteil eines Einblasgefäßes. Eine solche Ausgestaltung ist in den Fig. 4 und 5 dargestellt. Es handelt sich um ein Einblasgefäß zum gleichzeitigen Einleiten von Schüttgut in 24 verschiedene Förderleitungen. Das Einblasgefäß weist einen an seiner Oberseite verschlossenen im wesentlichen zylindrischen Druckbehälter 60 auf, der verschieden Stutzen zum Anschluss von Druck- bzw. Auflockerungsgasleitungen aufweist. Der Boden des Druckbehälters . 60 ist derart konisch nach innen eingestülpt, dass der Druckbehälter 60 in seinem unteren Bereich 62 einen nach unten hin schmaler werdenden ringförmigen Querschnitt aufweist. Mit anderen Worten ist im unteren Bereich des zylindrischen Druckbehälters ein ringförmiger Trichter 64 ausgebildet, an dem Schüttgut in dem Behälter entlang bis in eine untere ringförmige Wirbelkammer 66 gleitet. An die ringförmige Wirbelkammer 66 sind radial von innen 24 Förderleitungen 106 in der oben beschriebenen Art angeschlossen, denen im Inneren der Wirbelkammer entsprechend viele Gaseinlassdüsen 130 gegenüberstehen, die radial von außen in die Wirbelkammer montiert sind.

### Referenzzeichenliste

- 2: Vorrichtung zum Einleiten von Schüttgut in eine Förderleitung
- 4: Wirbelkammer
- 6: Förderleitung
- 8: Eintrittsöffnung
- 10: Stutzen
- 12: Flansch
- 14: Förderrichtung dargestellt durch den Pfeil
- 16: Ringkanal
- 18: Anschlüsse für Dosiergas
- 20: Dosiergasdüsen
- 22: Ringkanal
- 24: Anströmboden
- 26: Anströmkammer
- 28: Gasanschluss für Auflockerungsgas
- 30: Gaseinlassdüse
- 32: Achse
- 34: Gaszufuhrrohr
- 36: Stutzen
- 38: Stopfbuchse
- 40: Ringnut
- 42: Anschlüsse für Sperrgas
- 44: hinteres Ende des Gaszufuhrrohrs
- 48: Antrieb
- 50: Stirnseite der Gaseinlassdüse
- 52: Anströmboden
- 24: Deckelflansch
- 56: Gaszufuhrleitung
- 58: Anströmkammer
- 60: Druckbehälter
- 62: unterer Bereich des Druckbehälters
- 64: ringförmiger Trichter
- 66: ringförmige Wirbelkammer
- 106: Förderleitungen
- 130: Gaseinlassdüsen

## Patentansprüche

1. Vorrichtung zum Einleiten von schwer fließendem Schüttgut in eine Förderleitung, mit einer Wirbelkammer (4), an die eine Förderleitung (6) von außen derart anschließbar ist, dass die Förderleitung eine Eintrittsöffnung (8) in einer seitlichen Wandung der Wirbelkammer (4) ausbildet, und einer Vorrichtung zur Erzeugung einer Gasströmung im Inneren der Wirbelkammer, wobei die Gasströmung in Richtung der Eintrittsöffnung (8) gerichtet ist, **dadurch gekennzeichnet, dass** in der seitlichen Wandung der Wirbelkammer in unmittelbarer Nähe der Eintrittsöffnung (8) ein Anströmboden (24) angeordnet ist, durch den ein Auflockerungsfluid in die Wirbelkammer eingeleitet werden kann.

2. Vorrichtung nach Anspruch 1, **dadurch gekennzeichnet, dass** der Anströmboden mehrere Teilbereiche umfasst, die an der Peripherie der Eintrittsöffnung um die Eintrittsöffnung herum angeordnet sind.

3. Vorrichtung nach Anspruch 1, **dadurch gekennzeichnet, dass** der Anströmboden kreisringförmig ausgebildet ist und die Eintrittsöffnung radial umgibt.

4. Vorrichtung nach einem der Ansprüche 1 bis 3, **gekennzeichnet durch** eine Anströmkammer (26), die in der seitlichen Wandung der Wirbelkammer in unmittelbarer Nähe der Eintrittsöffnung angeordnet ist, wobei der Anströmboden (24) die Anströmkammer (26) zum Inneren der Wirbelkammer hin verschließt und wobei die Anströmkammer mit einem Auflockerungsgas beaufschlagbar ist.

5. Vorrichtung nach einem der Ansprüche 1 bis 4, **dadurch gekennzeichnet, dass** die Vorrichtung zur Erzeugung der Gasströmung eine Gaseinlassdüse (30) umfasst, die an eine Druckgasversorgung angeschlossen ist, wobei die Gaseinlassdüse (30) derart in der Wirbelkammer angeordnet ist, dass die gedachte Verlängerung ihrer Achse mit der Achse der Förderleitung (6) zusammenfällt.

6. Vorrichtung nach Anspruch 5, **dadurch gekennzeichnet, dass** die Gaseinlassdüse derart ausgestaltet und entlang ihrer Achse verfahrbar ist, dass die Eintrittsöffnung in der seitlichen Wandung durch die Gaseinfassdüse verschließbar ist.

7. Vorrichtung nach einem der Ansprüche 5 oder 6, **dadurch gekennzeichnet, dass** die Gaseinlassdüse als Laval-Düse ausgebildet ist, so dass die Gasströmung Schallgeschwindigkeit aufweist.

8. Vorrichtung nach einem der vorhergehenden Ansprüche, **gekennzeichnet durch** mehrere Dosiergasdüsert (30), die in der seitlichen Wandung um die Förderleitung (6), herum derart angeordnet sind, dass sie in die Förderleitung einmünden.

9. Vorrichtung nach einem der vorhergehenden Ansprüche, **dadurch gekennzeichnet, dass** die Wirbelkammer als Druckgefäß ausgebildet ist.

10. Vorrichtung nach einem der vorhergehenden Ansprüche, **dadurch gekennzeichnet dass** die Wirbelkammer in ihrem unteren Bereich einen Anströmboden (52) aufweist, durch den ein Auflockerungsgas in die Wirbelkammer eingeleitet werden kann.

## Claims

1. Device for introducing poorly flowing bulk material into a feed line, with a swirl chamber (4) to which a feed line (6) can be connected from outside in such a way that the feed line forms an inlet aperture (8) in a side wall of the swirl chamber (4), and a device for producing a gas flow inside the swirl chamber, wherein the gas flow is directed in the direction of the inlet aperture (8), **characterised in that**, in the side wall of the swirl chamber, in the immediate vicinity of the inlet aperture (8), a diffuser plate (24) is arranged, through which a loosening fluid can be introduced into the swirl chamber.

2. Device according to Claim 1, **characterised in that** the diffuser plate comprises several sections arranged at the periphery of the inlet aperture around the inlet aperture.

3. Device according to Claim 1, **characterised in that** the diffuser plate is of an annular design and radially surrounds the inlet aperture.

4. Device according to Claims 1 to 3, **characterised by** a diffuser chamber (26) arranged in the side wall of the swirl chamber in the immediate vicinity of the inlet aperture, wherein the diffuser plate (24) closes the diffuser chamber (26) to the inside of the swirl chamber, and wherein the diffuser chamber is subjected to a disaggregating gas.

5. Device according to one of Claims 1 to 4, **characterised in that** the device for producing the gas flow comprises a gas injection nozzle (30) connected to a compressed-gas supply, wherein the gas injection nozzle (30) is arranged in the swirl chamber in such a way that the imaginary extension of its axis coincides with the axis of the feed line (6).

6. Device according to Claim 5, **characterised in that** the gas injection nozzle is designed and can be moved along its axis in such a way, that the inlet aperture in the side wall can be closed by the gas injection nozzle.

7. Device according to one of Claims 5 or 6, **characterised in that** the gas injection nozzle is designed as a Laval nozzle, so that the gas flow exhibits the speed of sound.

8. Device according to one of the preceeding Claims, **characterised by** a number of metering-gas nozzles (30) arranged in the side wall, around the feed line (6) in such a way that they discharge into the feed line.

9. Device according to one of the preceeding Claims, **characterised in that** the swirl chamber is designed as a pressure vessel.

10. Device according to one of the preceeding Claims, **characterised in that**, in its lower region, the swirl chamber comprises a diffuser plate (52), through which a loosening gas can be introduced into the swirl chamber.

## Revendications

1. Dispositif d'introduction de matière en vrac à écoulement difficile dans un conduit de transport, qui présente une chambre de turbulence (4) à laquelle un conduit de transport (6) peut être raccordé de l'extérieur de manière à former une ouverture d'entrée (8) dans une paroi latérale de la chambre de turbulence (4), et qui présente un dispositif qui crée un écoulement de gaz à l'intérieur de la chambre de turbulence, l'écoulement de gaz étant orienté vers l'ouverture d'entrée (8), **caractérisé en ce qu'**un fond d'écoulement (24) à travers lequel un fluide de dispersion peut être introduit dans la chambre de turbulence est agencé dans la paroi latérale de la chambre de turbulence à proximité immédiate de l'ouverture d'entrée (8).

2. Dispositif selon la revendication 1, **caractérisé en ce que** le fond d'écoulement présente plusieurs zones partielles agencées sur le pourtour de l'ouverture d'entrée.

3. Dispositif selon la revendication 1, **caractérisé en ce que** le fond d'écoulement a une configuration torique et entoure radialement l'ouverture d'entrée.

4. Dispositif selon l'une des revendications 1 à 3, **caractérisé par** une chambre d'écoulement (26) agencée dans la paroi latérale de la chambre de turbulence à proximité immédiate de l'ouverture d'entrée, le fond d'écoulement (24) fermant la chambre d'écoulement (26) vers l'intérieur de la chambre de turbulence et la chambre d'écoulement pouvant être alimentée en gaz de dispersion.

5. Dispositif selon l'une des revendications 1 à 4, **caractérisé en ce que** le dispositif de création de l'écoulement de gaz comprend un ajutage d'introduction de gaz (30) qui est raccordé à une alimentation de gaz comprimé, l'ajutage d'introduction de gaz (30) étant agencé dans la chambre de turbulence de telle manière que le prolongement imaginaire de son axe corresponde à l'axe du conduit de transport (6).

6. Dispositif selon la revendication 5, **caractérisé en ce que** l'ajutage d'introduction de gaz est réalisé de manière à pouvoir être déplacé le long de son axe pour fermer l'ouverture d'entrée dans la paroi latérale.

7. Dispositif selon l'une des revendications 5 ou 6, **caractérisé en ce que** l'ajutage d'introduction de gaz est réalisé comme ajutage de Laval dans lequel le gaz s'écoule à la vitesse du son.

8. Dispositif selon l'une des revendications précédentes, **caractérisé par** plusieurs ajutages (30) de gaz de dosage agencés dans la paroi latérale autour du conduit de transport (6) de manière à déboucher dans celui-ci.

9. Dispositif selon l'une des revendications précédentes, **caractérisé en ce que** la chambre de turbulence est réalisée comme récipient résistant à la pression.

10. Dispositif selon l'une des revendications précédentes, **caractérisé en ce que** la chambre de turbulence présente dans sa partie inférieure un fond d'écoulement (52) à travers lequel un gaz de dispersion peut être introduit dans la chambre de turbulence.
